# EUROPÄISCHE PATENTANMELDUNG

(11) **EP 1 288 554 A1**
(43) Veröffentlichungstag der Anmeldung: **05.03.2003**
(21) Anmeldenummer: 01120476.5
(22) Anmeldetag: 28.08.2001
(51) Int. Cl.: F16L 13/14, F16L 33/22

(54) **Anschlussvorrichtung für ein Rohr**

(71) Anmelder: Polypress Rohrsysteme GmbH, 46485 Wesel (DE)
(72) Erfinder: Gardemann, Udo, 46485 Wiesel (DE)
(74) Vertreter: Szynka, Dirk

(57) **Zusammenfassung**

Die Erfindung betrifft eine neue Anschlußvorrichtung für ein Rohr (2), mit einer Innenhülse (1) und einer Außenhülse (3). Bei der Montage wird die Innenhülse (1) durch ein axiales Aufbringen der Außenhülse (3) nach innen verformt und auf ein Ende des Rohres (2) gepreßt. Dabei kann eine Stützhülse (4) innerhalb des Rohrendes (2) verwendet werden.

## Beschreibung

Die vorliegende Erfindung bezieht sich auf eine Anschlußvorrichtung für ein Rohr. Diese Anschlußvorrichtung soll dazu dienen, ein Ende des Rohres an einem Leitungsbauelement anzuschließen, das beispielsweise ein Zwischenstück zum Verbinden zweier oder mehrerer Rohre, ein anderer Leitungstyp, ein technisches Gerät o.ä. sein kann.

Der Begriff "Rohr" steht hierbei für ein Leitungselement mit länglicher Form und entlang der Länge im wesentlichen konstantem, geschlossenem Hohlquerschnitt, der jedoch nicht notwendigerweise kreisrund sein muß. Der Querschnitt soll bei der bestimmungsgemäßen Verwendung von plastischen Verbiegungen abgesehen formstabil sein, kann aber, wie weiter unten noch ausgeführt, bei der Montage der Anschlußvorrichtung etwas komprimiert werden. Die Erfindung richtet sich damit auf eine Anschlußvorrichtung für verschiedene technische Rohrsysteme, etwa in der Bau- und Gebäudetechnik oder in der Pneumatik. Es handelt sich dabei also um stabile und mechanisch belastbare Rohre, etwa aus Kunststoff oder Metall oder Verbundkonstruktionen wie Kunststoff-Metall-Kunststoff-Verbundrohre.

Bei solchen Rohrsystemen besteht regelmäßig die Notwendigkeit des Anschlusses eines Rohrendes an einem anderen Leitungsbauelement. Konventionelle Anschlußvorrichtungen für solche Rohre weisen in der Regel eine äußere metallene Außenhülse auf, die als Preßhülse bezeichnet wird, sowie eine in dem Rohrende anzuordnende Innenhülse, die das Rohr gegen den bei einem radialen Verpressen der Preßhülse nach innen auf das Rohr ausgeübten Druck abstützt und daher als Stützhülse bezeichnet wird. Bei diesem radialen Verpressen wird die Preßhülse plastisch stark verformt und quetscht infolge der plastischen Verformung das Rohrende auf der Innenhülse fest. Die Innenhülse bzw. Stützhülse besteht dabei in der Regel aus Metall, etwa Messing, und wird bei dem Verpressen nicht verformt.

Ausgehend von diesem Stand der Technik liegt der Erfindung das technische Problem zugrunde, eine einfache und zuverlässige Anschlußvorrichtung für ein Rohr anzugeben.

Die Erfindung richtet sich auf eine Anschlußvorrichtung für ein Rohr, bei der die Innenhülse quer zu einer Rohrlängsrichtung verformbar ist, die Außenhülse bei der Montage an dem Rohrende mit einer Bewegung in der Rohrlängsrichtung auf die Innenhülse aufgebracht werden kann und die Außenhülse die Innenhülse dadurch nach innen verformt und auf das Rohrende drückt, so daß die Innenhülse und die Außenhülse auf dem Rohrende gehalten sind.

Zunächst ist der Klarheit der verwendeten Begriffe halber festzustellen, daß bei dieser Erfindung mit dem Begriff "Innenhülse" ein Bauteil bezeichnet wird, das in montiertem Zustand zumindest mit dem für die oben beschriebene Funktion wesentlichen Teil außerhalb des Rohrendes liegt. Im Unterschied dazu wird das der konventionellen Hülse innerhalb des Rohrendes entsprechende Bauteil im folgenden als Stützhülse bezeichnet. Im Oberbegriff des Anspruchs und der obenstehenden Einleitung wurde die Stützhülse des Standes der Technik jedoch als Innenhülse benannt, weil sie in montiertem Zustand beim Stand der Technik ebenfalls innerhalb der Preßhülse (also Außenhülse des Standes der Technik) liegt.

Bei der Erfindung ist also vorgesehen, daß außerhalb des Rohres (zumindest) zwei Hülsen vorgesehen sind, nämlich die Innenhülse und die Außenhülse. Dabei soll die Außenhülse bei der Montage in der Rohrlängsrichtung auf die Innenhülse aufgebracht werden, um dann zumindest zu einem Teil außerhalb der Innenhülse zu liegen. Dabei soll die Außenhülse die Innenhülse zusammendrücken und nach innen verformen, also auf das Rohrende aufdrücken. Insgesamt entsteht dabei eine Verklemmung zwischen der Außenhülse, der Innenhülse und dem Rohrende, die diese Teile zusammen hält.

Durch dieses axiale Aufbringen der Außenhülse auf die Innenhülse wird also die Innenhülse und infolgedessen auch die Außenhülse auf dem Rohrende verklemmt. Wichtig ist dabei, daß das axiale Aufbringen für diese Verklemmung ursächlich ist. Die die Verklemmung hervorrufenden Kräfte werden also durch die axiale Bewegung direkt erzeugt (im folgenden wird der Begriff "axial" der Einfachheit halber für "in Rohrlängsrichtung" benutzt, ohne daß dadurch eine Einschränkung auf rotationssymmetrische Querschnittsformen gemeint ist).

Beim Stand der Technik wird die Verklemmung jedoch durch das radiale Verpressen der äußeren Preßhülse auf dem Rohrende und mittelbar auch auf der inneren Stützhülse hervorgerufen. Dort werden die Haltekräfte also durch eine plastische Verformung infolge einer radialen Bewegung erzeugt.

Die Erfindung hat zunächst den Vorteil, daß die Verwendung einer Preßzange, wie sie zum konventionellen Verpressen von Preßhülsen verwendet wird, überflüssig ist. Dies ist in vielen Montagesituationen von Vorteil, insbesondere wenn der Zugang erschwert ist. Bei der Erfindung kann die Außenhülse je nach der Größe der aufzubringenden Kräfte mit der Hand, mit einer Rohrzange oder dergleichen aufgebracht werden oder auch aufgeschlagen werden. Ferner bietet die Erfindung eine Grundlage für verschiedene im folgenden näher dargelegte Verbesserungen, die optional vorhanden sein können.

Vorzugsweise weist entweder eine Innenmantelfläche der Außenhülse oder eine Außenmantelfläche der Innenhülse einen dergestalt angeschrägten Abschnitt auf, daß das axiale Aufbringen die notwendigen Klemmkräfte erzeugt.

Weiterhin ist die Außenhülse vorzugsweise elastisch verformbar, und zwar mit einer vergleichsweise großen Federkonstanten. Sie soll dann bei der Montage auch ausschließlich elastisch verformt werden, also infolge ihrer Elastizität dauerhaft die Klemmkraft aufbringen. Dies hat gegenüber der konventionellen plastischen Verformung der Preßhülse den großen Vorteil, daß die Außenhülse bei durch Temperaturschwankungen verursachten Expansionen oder Kontraktionen der verschiedenen Materialien "mitgeht". Die Außenhülse kann dazu insbesondere aus einem hartelastischen Kunststoffmaterial mit geeigneter Wandstärke bestehen. Die maximale elastische Spannung des Materials sollte dabei vorzugsweise zumindest 50 kg/mm² betragen. Ein geeignetes Material ist der Kunststoff PPSU. Höhere maximale elastische Spannungen sind bevorzugt, etwa solche von zumindest 100, besser 150 oder auch zumindest 200 kg/mm².

Auch die Innenhülse soll vorzugsweise elastisch verformt werden, also ebenfalls nicht wie die konventionelle Preßhülse plastisch verpreßt werden. Hierbei sind jedoch kleinere Federkonstanten anzustreben, weil die Innenhülse bei der Erfindung keine zu großen Kräfte gegen das Anpressen durch die Außenhülse auf das Rohrende aufbringen soll. Vielmehr reicht es aus, wenn sie dem Andrücken durch die Außenhülse nachgibt. Hierzu kann ein geeignetes Material und/oder eine entsprechende Formgebung der Innenhülse beitragen.

Beispielsweise kann die Innenhülse zumindest einen axialen Schlitz, vorzugsweise zumindest zwei axiale Schlitze, aufweisen. Alternativ oder zusätzlich können auch in Umfangsrichtung laufende Schlitze vorgesehen sein, um ein nach innen Verformen der sich auf einer Seite dieser Umfangsschlitze befindenden Teile der Innenhülse zu erleichtern. Zur Veranschaulichung wird auf das Ausführungsbeispiel verwiesen.

Diese Schlitze können ferner den Vorteil haben, daß das Rohrende durch die Innenhülse hindurch teilweise sichtbar bleibt. Die Schlitze können dabei insbesondere so ausgelegt sein, daß jedenfalls vor dem vollständigen Aufbringen der Außenhülse visuell kontrolliert werden kann, ob das Rohrende vollständig in die richtige Position in der Innenhülse gebracht worden ist.

Die erfindungsgemäße Anschlußvorrichtung kann im Unterschied zu dem zitierten Stand der Technik lösbar sein. Dies folgt daraus, daß eine plastische Verformung der Außenhülse unterbleiben kann. Die nicht oder nur elastisch verformte Außenhülse kann jedoch mit entsprechendem Kraftaufwand bei geeigneter Ausgestaltung der miteinander in Kontakt kommenden Flächen der beiden Hülsen wieder von der Innenhülse abgenommen werden. Wenn die Innenhülse durch die Außenhülse plastisch verformt worden sein sollte, kann diese plastische Verformung rückgängig gemacht werden, wobei jedoch bei wiederholtem Lösen die Gefahr eines Bruches der Innenhülse auftreten kann.

Dieser Aspekt bietet einen wesentlichen Vorteil der Erfindung gegenüber dem Stand der Technik, weil nach falsch gesetzten Anschlußvorrichtungen beispielsweise wegen falscher Rohrlänge oder falscher Auswahl des Rohrendes oder zur nachträglichen Kontrolle oder Demontage nicht mehr eine verpreßte metallene Preßhülse aufgeschnitten werden muß, was in der Regel nicht nur mit einer Zerstörung der Preßhülse sondern zudem auch zumindest des Rohrendes verbunden ist.

Bevorzugt und besonders einfach ist es, wenn die Außenhülse durch einfaches axiales Aufschieben auf die Innenhülse aufgebracht wird. Dies wird in dem Ausführungsbeispiel veranschaulicht. Jedoch können beispielsweise auch Schraubgewinde verwendet werden, was jedoch weniger bevorzugt ist.

Weiterhin ist es bevorzugt, die Außenhülse direkt, also ohne zwischenliegendes Element, auf die Innenhülse aufzubringen, und ferner bevorzugt, die Innenhülse ebenfalls direkt auf das Rohrende aufzubringen. Damit kann ein einfacher und kostengünstiger Aufbau erreicht werden.

Die erfindungsgemäße Anschlußvorrichtung kann bei ausreichender Belastbarkeit des Rohrendes ohne Stützhülse innerhalb des Rohrendes eingesetzt werden. Allerdings ist die Verwendung zusammen mit einer Stützhülse in vielen Fällen von Vorteil und demzufolge erfindungsgemäß bevorzugt. Zum einen lassen sich mit der Stützhülse besonders einfach die Leitungsbauelemente anschließen, indem diese mit der Stützhülse integriert oder verschraubt oder anderweitig kombiniert sind, zum anderen erlaubt die Stützhülse eine besonders feste Verklemmung der Anschlußvorrichtung gegenüber dem Rohrende. Allerdings kann beispielsweise auch die Außenhülse oder (vorzugsweise) die Innenhülse mit dem Leitungsbauelement kombiniert sein, das angeschlossen werden soll. Im einfachsten Fall kann die entsprechende Hülse dazu ein Gewinde aufweisen. Es ist z.B. aber auch denkbar, daß die entsprechende Hülse integrierterweise als Deckel ausgeführt ist und das Rohrende verschließt. In diesem Fall ist dann der Rohrverschluß als Leitungsbauelement anzusehen.

Die Stützhülse kann, wie bei konventionellen Anwendungen auch, mit zusätzlichen Dichtungen versehen sein, etwa mit in Umfangsnuten eingesetzten O-Ringen. Außerdem kann sie eine Außenmantelfläche aufweisen, die einen Formschluß mit dem Rohrende herstellt. Die Innenhülse kann alternativ oder zusätzlich eine Innenmantelfläche aufweisen, die in montiertem Zustand zusätzlich zu einer Klemmwirkung (also einem Kraftschluß) einen Formschluß mit dem Rohrende herstellt. Die Ausgestaltungen der Innenmantelfläche der Innenhülse und der Außenmantelfläche der Stützhülse können dabei aufeinander abgestimmt sein.

Die Stützhülse ist in der Regel ein bei der Montage unverformbares Teil und kann aus Metall, etwa Messing, bestehen. Bevorzugt ist, daß die Stützhülse und die Innenhülse voneinander getrennte Bauteile sind. Damit ist die Flexibilität höher, d.h. es können für verschiedene Stützhülsentypen standardisierte Sätze aus Außenhülse und Innenhülse verwendet werden.

Insbesondere kann die Außenmantelfläche der Stützhülse mit einer O-Ringdichtung versehen sein und die Innenmantelfläche der Innenhülse mit einer vorstehenden Rippe, wobei die Rippe und die O-Ringdichtung im wesentlichen auf der gleichen axialen Position liegen können. Dadurch drückt die Rippe das Rohrende auf die O-Ringdichtung auf. Es kann jedoch ein axialer Versatz zwischen Rippe und O-Ringdichtung auftreten. Ferner ist es denkbar, bei einer Mehrzahl Rippen und einer Mehrzahl O-Ringdichtungen für einzelne Rippen und O-Ringdichtungen eine axiale Zuordnung und für andere einen axialen Versatz zu wählen.

Ferner kann die Innenmantelfläche der Innenhülse einen Anschlag für das Rohrende aufweisen, also einen nach innen ragenden Vorsprung, der in Umfangsrichtung durchgehend sein kann aber nicht muß. Der Anschlag an der Innenmantelfläche der Innenhülse verhindert das Durchrutschen des Rohrendes bei dem Einsetzen während der Montage und legt dieses auf die richtige Position fest. Dies gilt insbesondere auch dann, wenn keine Stützhülse verwendet wird oder die Stützhülse erst in das Rohrende eingeschoben werden soll, wenn die Innenhülse bereits auf dem Rohrende sitzt.

Ferner kann die Außenmantelfläche der Innenhülse einen Anschlag für die Außenhülse aufweisen, der ebenfalls nicht über den gesamten Umfang durchgehen muß. Es könnte auch die Innenmantelfläche der Außenhülse einen Anschlag für die Innenhülse aufweisen, was jedoch weniger bevorzugt ist, weil bei der Montage die Außenhülse bewegt wird und damit die Bewegung auf den Anschlag der Innenhülse zu visuell besser zu erfassen ist.

Ferner kann erfindungsgemäß ein Schutzelement vorgesehen sein, das vor der Montage die für das Einführen des Rohrendes in die Innenhülse vorgesehene Einführöffnung abdeckt und damit einem Eindringen von Schmutz entgegenwirkt. Wenn die Anschlußvorrichtung gemeinsam mit einer Stützhülse bevorratet wird, kann die Innenhülse auf die Stützhülse aufgeschoben sein, so daß das Schutzelement lediglich ein Schutzring für den Zwischenraum zwischen Stützhülse und Innenhülse ist. Zu den Einzelheiten hierzu wird verwiesen auf eine frühere europäische Patentanmeldung derselben Anmelderin mit dem Aktenzeichen 01 116 076.9.

Weiterhin können die Innenmantelfläche der Außenhülse und die Außenmantelfläche der Innenhülse so gestaltet sein, daß sie im fertig montierten Zustand miteinander verrasten. Eine Variante ist im Ausführungsbeispiel dargestellt. Dies hat zum einen den Vorteil, daß der Monteur durch die Verrastung eine Bestätigung dafür erhält, daß er die Außenhülse in ausreichendem Maß auf die Innenhülse aufgebracht hat, zum anderen wird der montierte Zustand zusätzlich gesichert. Die Verrastung steht dabei einer Lösbarkeit der Verbindung nicht notwendigerweise im Weg, sondern erhöht möglicherweise nur den dafür notwendigen Kraftaufwand.

Das Rohrende ist vorzugsweise ein Rohrende mit einer gewissen Restverformbarkeit, so daß es durch die Innenhülse zur Herstellung eines Formschlusses verformt werden kann. Dies gilt insbesondere für die bereits erwähnte Kombination zwischen bestimmten Ausgestaltungen der Außenmantelfläche der Stützhülse und der Innenmantelfläche der Innenhülse. Eine ausreichende Restverformbarkeit ist in der Regel bei Kunststoffrohren gegeben, kann aber beispielsweise auch bei einem entsprechend großen Andruck durch die Außenhülse bei Metallrohren oder Kunststoff-Metall-Kunststoff-Verbundrohren gegeben sein. Jedenfalls richtet sich die Erfindung vorzugsweise auf solche Kombinationen von Anschlußvorrichtung und Rohr, bei denen das Rohr während der Montage verformt wird. Diese Verformung könnte dabei elastisch, plastisch oder auch gemischt sein.

Weiterhin hat die Erfindung den Vorteil, daß das Rohr nicht wie im Stand der Technik aufgeweitet werden muß, bevor es auf die Stützhülse aufgebracht wird. Im Stand der Technik wird die Verbindung zwischen Rohrende und Stützhülse durch die Preßhülse häufig nämlich nur zusätzlich befestigt oder gesichert, das Rohr jedoch zur Verbesserung des Sitzes und der Dichteigenschaften aufgeweitet, um erst dann auf die Stützhülse aufgepaßt werden zu können. Die erfindungsgemäße Anschlußvorrichtung ist vorzugsweise so ausgelegt, daß das dazu passende Rohrende ohne Aufweitung für die Montage verwendet werden kann.

Im folgenden wird ein Ausführungsbeispiel der Erfindung im einzelnen beschrieben, um diese näher zu veranschaulichen. Die dabei offenbar einzelnen Merkmale können auch in anderen Kombinationen als dargestellt erfindungswesentlich sein. Im einzelnen zeigt:
Figur 1 eine Längsschnittansicht durch eine erfindungsgemäße Innenhülse, wobei die axiale Richtung horizontal in der Papierebene liegt;
Figur 2 eine Querschnittsansicht durch die Innenhülse aus Figur 1 entlang der Linie A-A, wobei die axiale Richtung senkrecht zu der Papierebene steht;
Figur 3 eine Figur 1 entsprechende Längsschnittansicht durch eine erfindungsgemäße Außenhülse zu der Innenhülse aus Figur 1 und Figur 2;
Figur 4 eine den Figuren 1 und 3 entsprechende Längsschnittansicht durch die Innenhülse und die Außenhülse und durch ein dazu passendes Rohrende sowie durch eine in die Innenhülse eingesetzte Stützhülse vor Fertigstellung der Montage; und
Figur 5 eine Figur 4 entsprechende Längsschnittansicht nach Fertigstellung der Montage.

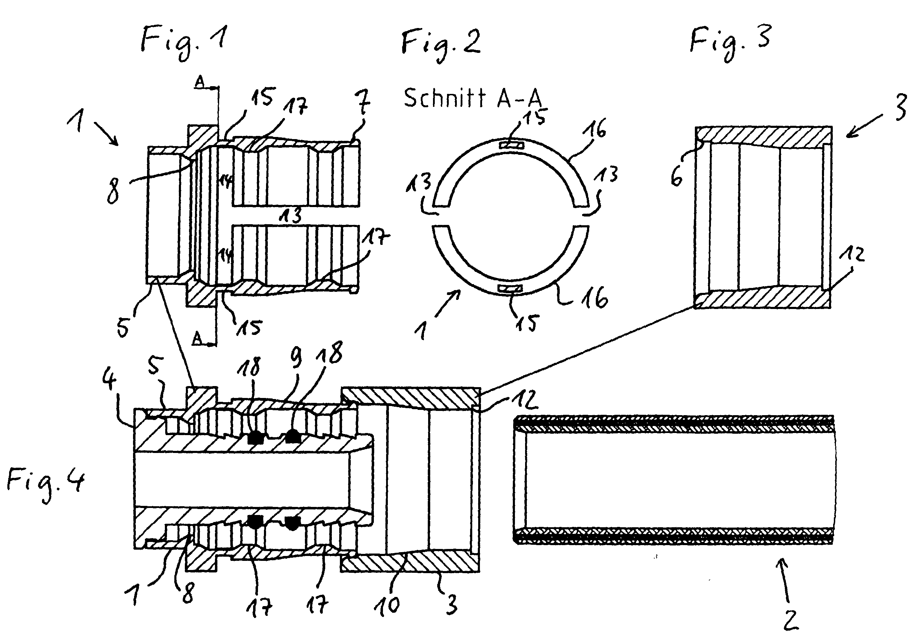

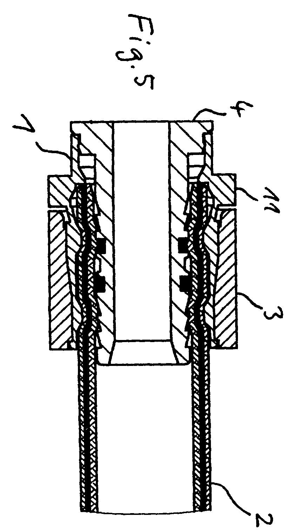

Figur 1 zeigt einen Längsschnitt durch eine Innenhülse 1 einer erfindungsgemäßen Anschlußvorrichtung. Diese Innenhülse 1 ist in Figur 2 in dem in Figur 1 angegebenen Schnitt A-A dargestellt. Die axiale Richtung eines in den Figuren 4 und 5, die Figur 1 entsprechende Längsschnitte zeigen, eingezeichneten Rohrendes 2 liegt in den Figuren 1, 4 und 5 horizontal in der Papierebene und steht in Figur 2 senkrecht auf ihr. Gemäß Figur 2 hat die Innenhülse 1 einen im wesentlichen kreisringförmigen Querschnitt quer zu der axialen Richtung. In Figur 1 liegt rechts dasjenige Ende der Innenhülse 1, in das das Rohrende 2 eingeführt und auf das eine in Figur 3 ebenfalls im Längsschnitt eingezeichnete Außenhülse 3 aufgeschoben werden soll. Der Vorgang des Aufschiebens ist dabei im Vergleich der Figuren 4 und 5 erkennbar.

Die Figuren 4 und 5 zeigen ferner (ebenfalls im Längsschnitt) eine konventionelle Stützhülse 4, die bei der Montage in das Rohrende 2 eingeschoben wird. Die Montage könnte so verlaufen, daß zunächst die Außenhülse 3 auf das Rohrende 2 aufgeschoben wird und dann die Innenhülse 1 auf das Rohrende 2 aufgeschoben wird, woraufhin die Stützhülse 4 in das Rohrende 2 eingeschoben wird, bis sie in noch zu erläuternder Weise an der Innenhülse 1 anschlägt. Schließlich kann dann die Außenhülse 3 mit entsprechender Kraft axial auf die Innenhülse 1 aufgeschoben werden, womit der Zustand aus Figur 5 hergestellt wird, in dem die Außenhülse 3 die Innenhülse 1 elastisch nach innen verformt und dadurch das Rohrende 2 zwischen der Innenhülse 1 und der Stützhülse 4 verklemmt.

Im vorliegenden Fall ist jedoch eine alternative Vorgehensweise gezeigt, bei der zunächst die Innenhülse 1 gemäß Figur 4 auf die Stützhülse 4 aufgesetzt ist, wobei ein um die axiale Richtung rotationssymmetrischer Hohlzylinderansatz 5 der Innenhülse auf einer entsprechenden Flanke der Stützhülse 4 zu liegen kommt. Die Figuren 4 und 5 zeigen, daß die Außenmantelfläche der Flanke ein relativ schwach ausgebildetes Sägezahnprofil aufweist, um den Hohlzylinderansatz 5 der Innenhülse 1 dort klemmend zu halten.

Ferner wird die Außenhülse 3 auf das dem Hohlzylinderansatz 5 entgegengesetzte Ende der Innenhülse 1 aufgesetzt, und zwar nur soweit, daß sich eine leichte radiale Erweiterung 6 der der Innenhülse 1 zugewandten Öffnung der Außenhülse 3 leicht klemmend auf eine in Umfangsrichtung durchgehende Rastnase 7 an dem der Außenhülse 3 zugewandten Ende der Außenmantelfläche der Innenhülse 1 aufsetzt. Diese Situation ist in Figur 4 dargestellt. Die Innenhülse 1, die Außenhülse 3 und die Stützhülse 4 sind nun vorbereitet für das Einführen des Rohrendes 2 in die dem Rohrende zugewandte Öffnung der Außenhülse 3 und den zwischen der Stützhülse 4 und der Innenhülse 1 gebildeten Zwischenraum. Dabei läßt sich das Rohrende 2 einführen, bis sein vorderer Abschluß an einem Anschlagbund 8 an einer Innenmantelfläche der Innenhülse 1 anschlägt. Dadurch wird das Rohrende 2 lagegenau positioniert, kurz bevor es an die radiale Wand der den Hohlzylinderansatz 5 der Innenhülse 1 tragenden radialen Verdickung der Stützhülse 4 anschlägt.

Nun kann die Außenhülse 3 mit einer Schiebezange oder Rohrzange kräftig auf die Stützhülse 4 zu axial verschoben werden. Dabei rutscht eine Innenmantelfläche der Außenhülse 3 zunächst über die bereits erwähnte Rastnase 7 der Innenhülse 1 auf eine komplementäre Außenmantelfläche der Innenhülse 1. Dann treten ein konischer Bereich 9 der Außenmantelfläche der Innenhülse 1 und ein konischer Bereich 10 der Innenmantelfläche der Außenhülse 3 jeweils in Wechselwirkung mit der jeweils komplementären Fläche. Durch die Konizität und die Radiuszunahme der Außenmantelfläche der Innenhülse 1 bzw. die Radiusabnahme der Innenmantelfläche der Außenhülse 3 jeweils von der Rastnase 7 zu dem entgegengesetzten Ende bzw. von der radialen Erweiterung 6 zu dem entgegengesetzten Ende hin verformt die Außenhülse 3 dabei die Innenhülse 1 elastisch und drückt diese kräftig radial nach innen. Dabei kann die Außenhülse 3 soweit auf die Innenhülse 1 aufgeschoben werden, bis ihr an die Erweiterung 6 anschließendes Vorderende an einen Anschlagbund 11 der Außenmantelfläche der Innenhülse 1 anschlägt. In dieser Position kann die bereits beschriebene Rastnase 7 mit einer komplementären radialen und über den Umfang durchgehenden Ausnehmung 12 an dem der Stützhülse 4 entgegengesetzten Ende der Außenhülse 3 einrasten, wie Figur 5 verdeutlicht. In Figur 5 erkennt man auch, daß die Außenhülse 3 in der Verrastung zwischen der Rastnase 7 und der Ausnehmung 12 gegenüber dem Anschlagbund 11 noch etwas Spiel hat. Dieses Spiel dient zur Berücksichtigung von Fertigungstoleranzen, damit die Verrastung nicht etwa durch ein zu frühes Anschlagen an dem Anschlagbund 11 unterbunden wird. Bei dem dargestellten Beispiel führt dieses Spiel also dazu, daß die Außenhülse 3 nach dem Anschlagen an dem Anschlagbund 11 noch etwas zurückrutschen könnte.

Die elastische Verformung des in den Figuren rechts von dem Anschlagbund 11 liegenden Teils der Innenhülse 1 kann durch die Materialeigenschaften der Innenhülse 1 begründet sein. Beim vorliegenden Ausführungsbeispiel ist die Innenhülse 1 jedoch in folgender Weise geschlitzt. Zum einen weist sie zwei achsparallele Schlitze 13 auf, die in Figur 2 beide und von denen einer in Figur 1 zu erkennen ist. Zum zweiten weist die Innenhülse 1 zwei in Umfangsrichtung verlaufende Schlitze 14 auf, die sich auf der Seite des elastisch zu verformenden Teils der Innenhülse 1 an den Anschlagbund 11 anschließen. Eine dieser Umfangsschlitze ist in Figur 1 zu erkennen. In Figur 2 sind beide Umfangsschlitze 14 insoweit zu sehen, als der von den Schlitzen 14 nicht erfaßte Materialabschnitt 15, der in den Figuren 1 und 2 jeweils oben und unten liegt, in Figur 1 im Schnitt dargestellt ist, während im Bereich der Schlitze 14 eine axial gesehene Ansicht des elastisch zu verformenden Teils der Innenhülse 1 zu erkennen ist.

Die Schlitzkonstruktion 13, 14 führt insgesamt dazu, daß sich zwei im wesentlichen einer Hohlzylinderhälfte entsprechende Schalenhälften 16, die an dem dem Anschlagbund 11 entsprechenden Bereich der Innenhülse 1 lediglich über die Stege 15 gehalten sind, durch die Gelenkigkeit dieser Stege 15 zusammendrücken lassen. Außerdem sind diese Schalenhälften 16 relativ dünnwandig ausgebildet und daher in sich verformbar. Sie können also insbesondere auf einen kleineren Radius zusammengedrückt werden. Die Axialschlitze 13 verhindern dabei eine Faltenbildung oder dergleichen, weil bei dem vorliegenden Beispiel das verwendete Material zwar elastisch verformbar, jedoch praktisch nicht kompressibel ist. Dies könnte bei anderen Ausführungsformen anders sein. Es ist noch darauf hinzuweisen, daß die Materialstärke der Stege 15 gegenüber den angrenzenden Bereichen der Innenhülse 1 etwas verringert ist, um die Gelenkfunktion der Stege zu unterstützen. Figur 5 zeigt, daß die Stege im montierten Zustand infolge der Radiusverminderung der Schalenhälften 16 etwas konisch nach innen laufen.

Ein weiterer Vorteil der axialen Schlitze 13 und insbesondere der Umfangsschlitze 14 besteht darin, daß das Rohrende 3 noch gesehen werden kann, während es ausgehend von der in Figur 4 dargestellten Situation in den Zwischenraum zwischen der Innenhülse 1 und der Stützhülse 4 eingeschoben wird. Zunächst sieht man das im Sinne der Einführrichtung vordere Ende des Rohrendes durch die axialen Schlitze 13 und schließlich durch die Umfangsschlitze 14. Wenn es durch die Umfangsschlitze 14 nicht mehr zu sehen ist, befindet es sich zwar noch nicht an dem Anschlagbund 8, ist jedoch schon so weit eingeführt, daß die Montage jedenfalls erfolgen kann.

Figur 5 verdeutlicht weiterhin, daß an der Innenmantelfläche der Innenhülse 1, konkret der Schalenhälften 16, vorgesehene Rippen 17 das Rohrende bei der Montage infolge des Andrucks durch die Außenhülse 3 radial nach innen verformen. Damit drückt die Innenhülse 1 das Rohrende in dem Bereich der Rippen 17 besonders fest auf die Stützhülse 4 auf, woraus sich durch die Lokalisierung der Krafteinwirkung an diesen Stellen eine Dichtungsfunktion sowohl bezüglich der Grenzfläche zwischen Rohrende 2 und Innenhülse 1 als auch bezüglich der Grenzfläche zwischen Stützhülse 4 und Rohrende 2 ergibt.

Die Rippen 17 sind dabei beidseits unter 30° angeschrägt gestaltet. Zum einen dient dies der Erleichterung des Einführens des Rohrendes 2, zum anderen dem Entformen nach dem Spritzguß der Innenhülse 1. Auch bei der Außenhülse 3 handelt es sich um ein Kunststoffspritzgußteil. Die Innenhülse 1 und die Außenhülse 3 bestehen im übrigen aus einem PPSU-Material mit einer maximalen elastischen Spannung von deutlich über 200 kg/mm².

Infolge der großen elastischen Belastbarkeit des Materials und der Härte des Materials sowie infolge der relativ großen Materialstärke der Außenhülse 3 verformt sich diese bei der Herstellung der Montage nur wenig und hält jedoch infolge dieser elastischen Verformung einen Andruck auf der Innenhülse 1 und dem Rohrende 2 aufrecht, selbst wenn sich durch Temperaturschwankungen Expansionen und Kontraktionen ergeben. Andererseits würde sich eine metallene Außenhülse 3 praktisch gar nicht elastisch verformen, so daß die Stabilität des Anschlusses gegenüber Temperaturschwankungen verschlechtert wäre.

Zusätzlich sind auf der Außenmantelfläche der Stützhülse 4 zwei Elastomer-O-Ringdichtungen 18 vorgesehen, die bei dem Andruck des Rohrendes 2 auf die Stützhülse 2 verformt werden und damit ihre Dichtfunktion erfüllen. Die Figur zeigt, dass die bei diesem Ausführungsbeispiel dem Anschlagbund 8 näherliegende Rippe 17 mit der entsprechenden O-Ringdichtung 18 axial im wesentlichen übereinstimmt, also das Rohrende 2, wie Figur 5 besonders deutlich zeigt, sehr fest auf diese O-Ringdichtung 18 aufdrückt. Andererseits ist die andere Rippe 17 gegenüber der zweiten O-Ringdichtung 18 axial versetzt, so dass diese O-Ringdichtung 18, wie ebenfalls Figur 5 zeigt, weniger stark belastet wird.

Ferner weist die Außenmantelfläche der Stützhülse 4 sägezahnförmige Profile auf, die eine zusätzliche Dichtfunktion haben und außerdem die Verwendung zwischen der Stützhülse 4 und dem Rohrende 2 gegen Zugbelastung sichern. Die Sägezahnprofile graben sich dabei in das Material des Rohrendes 2 ein.

Im vorliegenden Fall handelt es sich dabei um ein Kunststoff-Metall-Kunststoff-Verbundrohr, dessen Metallkern in den Figuren 4 und 5 durch die engere Schraffur angedeutet ist.

Die Stützhülse 4 ist im übrigen mit einem sich von dem Rohrende 2 weg erstreckenden und in den Figuren nicht dargestellten Außengewindeansatz versehen, an den ein Leitungsbauelement, etwa eine Armatur, angeschlossen werden kann. Die Stützhülse 4 könnte auch in irgendeiner anderen Form mit einem Leitungsbauelement integriert sein.

Im übrigen hat die erfindungsgemäße Anschlussvorrichtung die Vorteile eines sehr einfachen und infolge der Spritzgußherstellung aus Kunststoffmaterialien kostengünstigen Aufbaus. Sie erfordert keine Verpressung sondern läßt sich einfach durch axiales Aufschieben montieren, wozu eine Schiebezange oder ein anderes Werkzeug dienen kann.

## Patentansprüche

1. Anschlußvorrichtung für ein Rohr, die an einem Ende (2) des Rohres montiert werden kann, um das Rohrende (2) an einem Leitungsbauelement (4) anzuschließen,
wobei die Anschlußvorrichtung eine Innenhülse (1) und eine Außenhülse (3) aufweist und die Außenhülse (3) in montiertem Zustand zumindest teilweise außerhalb der Innenhülse (1) angeordnet ist,
**dadurch gekennzeichnet,**
**daß** die Innenhülse (1) quer zu einer Rohrlängsrichtung verformbar ist,
die Außenhülse (3) bei der Montage an dem Rohrende (2) mit einer Bewegung in der Rohrlängsrichtung auf die Innenhülse (1) aufgebracht werden kann und
die Außenhülse (3) die Innenhülse (1) dadurch nach innen verformt und auf das Rohrende (2) drückt, so daß die Innenhülse (1) und die Außenhülse (3) auf dem Rohrende (2) gehalten sind.

2. Anschlußvorrichtung nach Anspruch 1, bei der die Außenhülse (3) quer zu der Rohrlängsrichtung elastisch verformbar ist und dazu ausgelegt ist, bei der Montage ausschließlich elastisch verformt zu werden.

3. Anschlußvorrichtung nach Anspruch 2, bei der die Außenhülse (3) im wesentlichen aus einem Kunststoffmaterial mit einer maximalen elastischen Spannung von zumindest 50 kg/mm² besteht.

4. Anschlußvorrichtung nach Anspruch 1, bei der die Innenhülse (1) quer zu der Rohrlängsrichtung elastisch verformbar ist und dazu ausgelegt ist, bei der Montage ausschließlich elastisch verformt zu werden.

5. Anschlußvorrichtung nach Anspruch 4, bei der die Innenhülse (1) zumindest einen in Rohrlängsrichtung verlaufenden Schlitz (13) aufweist, um die elastische Verformbarkeit zu verbessern.

6. Anschlußvorrichtung nach Anspruch 4 oder 5, bei der die Innenhülse (1) zumindest einen in Umfangsrichtung verlaufenden Schlitz (14) aufweist, um die elastische Verformbarkeit zu verbessern.

7. Anschlußvorrichtung nach Anspruch 5 oder 6, die dazu ausgelegt ist, daß bei der Montage das Rohrende (2) jedenfalls vor dem Aufbringen der Außenhülse (3) auf die Innenhülse (1) durch einen der Schlitze (13, 14) sichtbar ist.

8. Anschlußvorrichtung nach Anspruch 2 oder 4, auch in Verbindung mit einem weiteren der vorstehenden Ansprüche, die dazu ausgelegt ist, die Außenhülse (3) und die Innenhülse (1) nach der Montage wieder von dem Rohrende (2) lösen zu können.

9. Anschlußvorrichtung nach einem der vorstehenden Ansprüche, bei der die Außenhülse (3) durch Aufschieben in Rohrlängsrichtung auf die Innenhülse (1) aufgebracht werden kann.

10. Anschlußvorrichtung nach einem der vorstehenden Ansprüche, bei der die Innenhülse (1) direkt auf das Rohrende (2) und die Außenhülse (3) direkt auf die Innenhülse (1) aufbringbar ist.

11. Anschlußvorrichtung nach einem der vorstehenden Ansprüche, die ferner eine Stützhülse (4) aufweist, die dazu ausgelegt ist, bei der Montage innerhalb des Rohrendes (2) angeordnet zu werden und dieses gegen das Andrücken der Innenhülse (1) durch die Außenhülse (3) auf das Rohrende (2) zu stützen.

12. Anschlußvorrichtung nach Anspruch 11, bei der die Stützhülse (4) und die Innenhülse (1) voneinander getrennte Bauteile sind.

13. Stützvorrichtung nach einem der vorstehenden Ansprüche, die neben der Außenhülse (3) und der Innenhülse (1) sowie ggfs. der Stützhülse (4) keine weiteren Bauteile aufweist.

14. Anschlußvorrichtung nach einem der vorstehenden Ansprüche, bei der die Innenhülse (1) eine Innenmantelfläche aufweist, die dazu ausgelegt ist, in montiertem Zustand einen Formschluß mit dem Rohrende (2) herzustellen.

15. Anschlußvorrichtung nach Anspruch 11 und 14, die eine auf einer Außenmantelfläche der Stützhülse (4) anzubringende O-Ringdichtung (18) aufweist und bei der die Innenmantelfläche der Innenhülse (1) eine nach innen vorstehenden Rippe (17) aufweist.

16. Anschlußvorrichtung nach einem der vorstehenden Ansprüche, bei der die Innenhülse (1) an einer Innenmantelfläche einen Anschlag (8) für das Rohrende (2) aufweist.

17. Anschlußvorrichtung nach einem der vorstehenden Ansprüche, bei der die Innenhülse (1) an einer Außenmantelfläche einen Anschlag (11) für die Außenhülse (3) aufweist.

18. Anschlußvorrichtung nach einem der vorstehenden Ansprüche mit einem Schutzelement zum Einlegen in eine Einführöffnung der Innenhülse für das Rohrende und Entgegenwirken gegen das Eindringen von Schmutz in die Einführöffnung.

19. Anschlußvorrichtung nach einem der vorstehenden Ansprüche, bei der ein Bereich der Außenmantelfläche der Innenhülse (1) und ein Bereich der Innenmantelfläche der Außenhülse (3) so gestaltet sind, daß sie miteinander verrasten (7, 12), wenn die Außenhülse (3) in für die Montage ausreichendem Maß auf die Innenhülse (1) aufgebracht ist.

20. Satz aus einem Rohr mit einem Rohrende (2) und einer Anschlußvorrichtung (1, 3) nach einem der vorstehenden Ansprüche für das Rohrende (2), bei dem die Anschlussvorrichtung (1, 3) dazu ausgelegt ist, das Rohrende (2) bei der Montage quer zu der Rohrlängsrichtung plastisch nach innen zu verformen.

21. Satz, auch nach Anspruch 20, aus einem Rohr mit einem Rohrende (2) und einer Anschlussvorrichtung (1,3) nach einem der vorstehenden Ansprüche für das Rohrende (2), bei dem die Anschlussvorrichtung (1, 3) dazu ausgelegt ist, daß das Rohrende (2) bei der Montage nicht aufgeweitet werden muß.
